# EUROPÄISCHE PATENTSCHRIFT

(11) **EP 0 719 939 B1**
(45) Veröffentlichungstag und Bekanntmachung des Hinweises auf die Patenterteilung: **11.09.2002**
(21) Anmeldenummer: 95120172.2
(22) Anmeldetag: 20.12.1995
(51) Int. Cl.: F04D 13/06, H01L 41/09

(54) **Piezo-Wanderwellenmotor für Spaltrohrpumpe**
Piezoelectric progressive wave motor for canned pump
Moteur piézoélectrique à ondes progressives pour pompe à tube d'entrefer

(30) Priorität: 28.12.1994 DE 4446606
(43) Veröffentlichungstag der Anmeldung: 03.07.1996
(73) Patentinhaber: WILO GmbH, D-44263 Dortmund (DE)
(72) Erfinder: Kech Hansjürgen Dipl.-Ing., D-58313 Herdecke (DE)
(74) Vertreter: COHAUSZ DAWIDOWICZ HANNIG & PARTNER

(56) Entgegenhaltungen:
- DE-A- 3 927 040
- US-A- 4 950 135
- PATENT ABSTRACTS OF JAPAN vol. 016, no. 569 (M-1343), 9. Dezember 1992 & JP 04 219483 A (KOJI TODA), 10. August 1992
- "ULTRASONIC MOTORS NOW IN VOGUE" JEE JOURNAL OF ELECTRONIC ENGINEERING, Bd. 26, Nr. 265, Januar 1989, Seite 84/85 XP000035494

## Beschreibung

Die Erfindung betrifft eine Pumpe mit einem in einem Gehäuse angeordneten Laufrad und einem Trennelement, das die fördermediums führende Seite von der elektrischen Antriebsseite trennt, wobei das Trennelement insbesondere ein Spaltrohr, Spalttopf oder eine Spaltscheibe ist

Die heute verwendeten Motoren zum Antrieb von Pumpen basieren überwiegend auf dem elektromagnetischen Prinzip. Elektromotoren haben jedoch bekanntlich den großen Nachteil, daß kompliziert herzustellende und relativ große Stator- und Rotorwicklungen notwendig sind um hohe Drehmomente zu erzeugen und entwickeln, bedingt durch die elektrischen und magnetischen Verluste hoher Betriebstemperaturen. Durch die großen Abmessungen eines solchen Elektromotors, basierend auf den herkömmlichen elektromagnetischen Prinzip, fallen heutige Kreiselpumpenantriebe relativ groß aus.

Aus der DE 3406408 sowie aus der US 4950135 A ist ein Ultraschallmotor bzw. Piezo-Wanderwellenmotor bekannt, bei dem mittels Piezo-Kristallen auf der Oberfläche eines Vibrationsteils bzw. Schwingstators eine Wanderwelle erzeugbar ist. An dem Schwingstator liegt direkt der Rotor des Motors an. Dieser Rotor wird von den Wellenbergen bzw. Schwingungsmaxima der Oberflächenwanderwelle des Schwingstators mitgenommen und somit in Rotation versetzt. Dies ist möglich, da die Oberflächenteilchen des Schwingstators beim Durchwandern einer sinusförmigen Schwingung der Wanderwelle eine elliptische Bahn durchlaufen. Ein derartiger Piezo-Wanderwellenmotor zeichnet sich durch seine kompakte Bauart und ein hohes Antriebsdrehmoment aus. Er ist zudem im Vergleich zu herkömmlichen Elektromotoren leiser und besteht aus weniger Teilen.

Aufgabe der Erfindung ist es daher, das Laufrad einer Spaltrohrpumpe mittels eines oben beschriebenen Piezo-Wanderwellenmotors anzutreiben.

Diese Aufgabe wird erfindungsgemäß dadurch gelöst, daß das Laufrad mittels eines Piezo-Wanderwellenmotors angetrieben ist, wobei der Piezo-Wanderwellenmotor Piezo-Elemente hat, die einen Schwingstator in Schwingung versetzen und das Trennelement der Schwingstator ist. Hierdurch wird vorteilsmäßig erreicht, daß das Trennelement zwei Funktionen übernimmt. So trennt das Trennelement zum einen die fördermediumsführende Seite von der elektrischen Antriebsseite und ist zusätzlich Schwingstator des Piezo-Wanderwellenmotors. Hierdurch kommt der Antrieb der Spaltrohrpumpe mit wenigen Teilen aus und ist somit äußerst kompakt und daher kostengünstig und leicht herstellbar.

Das Laufrad oder ein das Laufrad tragender Rotor liegt hierbei vorteilmäßig am Trennelement an und ist mittels einer auf der Oberfläche des Trennelementes umlaufenden Wanderwelle in Rotation versetzbar. In einer bevorzugten Ausführungsform liegt das Laufrad oder der Rotor zumindest teilweise mit seiner Mantelfläche an der zylindrischen Innenseite des Trennelementes an oder mit seiner der Pumpeneinlaßseite abgewandten Stirnseite am Trennelement an. Bei diesen bevorzugten Aufführungsformen liegen die Piezo-Elemente des Piezo-Wanderwellenmotors an der dem Laufrad oder dem Rotor abgewandten Seite des Trennelementes an.

Mittels elektrischer Spannungen insbesondere Wechselspannungen kann die Länge der Piezo-Elemente in Richtung der Flächennormalen der Anlagefläche zur Erzeugung der Wanderwelle auf dem Trennelement verändert werden. Durch das periodische Anregen des Trennelements mittels der Piezo-Elemente wird das Trennelement im Bereich der anliegenden Piezo-Elemente in Schwingung versetzt. Da die Piezo-Elemente um den Umfang der Rotorachse verteilt angeordnet sind, ist eine umlaufende Wanderwelle auf der dem Laufrad oder Rotor zugewandten Oberflächenseite des Trennelementes erzeugbar. Durch diese umlaufende Wanderwelle wird das an der Oberfläche anliegende Laufrad oder der Rotor in Rotation versetzt.

Es ist zudem vorteilsmäßig, wenn Piezo-Elemente im oder am Trennelement angeordnet sind und in Umfangsrichtung des Laufrades bei anlegen elektrischer Spannungen zur Erzeugung der Wanderwelle auf dem Trennelement ihre Länge insbesondere durch eine Wechselspannung veränderbar ist. Eine derartige Anordnung der Piezo-Elemente ist z. B. aus der DE 3927040 bekannt. Ein Vorteil dieser Anordnung der Piezo-Elemente ist, daß im Stator des Piezo-Wanderwellenmotors unterschiedliche Schwingungmoden angeregt und zur Beeinflußung dynamischer Eigenschaften wie Drehgeschwindigkeit oder Drehmoment verwendet werden können.

Es ist ferner von Vorteil, wenn das Laufrad oder der Rotor eine spezielle Anlagefläche hat, die am Trennelement im Bereich der anliegenden Piezo-Elemente anliegt, wobei auf der Anlagefläche eine Haftschicht ist, in die zumindest die Wellenberge der auf der Oberfläche des Trennelementes erzeugten Wanderwelle eingreifen. Mittels einer derartigen Haftschicht wird die Reibung zwischen der Schwingstatoroberfläche bzw. der Trennelementeoberfläche und dem Laufrad bzw. dem Rotor erhöht, wodurch das Antriebsdrehmoment ebenfalls erhöht wird.

Besonders vorteilsmäßig ist es, wenn das Laufrad oder der Rotor abdichtend am Trennelement anliegt, wodurch das Fördermedium durch die zusätzliche Abdichtung nicht in den Bereich des Lagers des Laufrades oder des Rotors gelangen kann. Die Haftschicht übernimmt dabei vorteilsmäßig die Abdichtung. In einer weiteren bevorzugten Ausführungsform hat das Trennelement an seiner dem Laufrad zugewandten Seite einen Kragen, wobei das Trennelement mit dem Kragen abdichtend am Gehäuse anliegt und hiermit die Montageöffnung für das Pumpenlaufrad verschließt.

Es ist ferner von Vorteil, wenn das Laufrad oder der Rotor mittels des Trennelementes selbst in axialer- und/oder radialer Richtung gelagert ist. Hierzu ist vorteilsmäßig die Anlagefläche des Laufrades oder des Rotors zumindest teilweise konkav oder konvex ausgestaltet, wobei die Oberfläche des Trennelementes im Bereich der anliegenden Anlagefläche des Laufrades oder des Rotors bei konkav ausgestalteter Anlagefläche konvex und bei konvex ausgestalteter Anlagefläche des Laufradrotors konkav ausgestaltet ist. Durch eine derartige Ausgestaltung der Anlagefläche bzw. der Oberfläche ist das Laufrad oder der Rotor in axialler und/oder radialer Richtung formschlüssig gehalten. Ein zusätzliches Lager für das Laufrad oder den Rotor kann somit voerteilsmäßig entfallen.

Die Anlagefläche kann zudem gerade ausgestaltet sein, wobei der Rotor oder das Laufrad in einer ringförmigen Nut im Trennelement einliegt. Auch kann der Rotor oder das Laufrad eine zylindrische Nut aufweisen in der ein am Trennelement angeformter zylindrischer Vorsprung einliegt.

Es ist ferner von Vorteil, wenn die piezo-elementesteuernde Elektronik direkt am Trennelement anliegt. Hierdurch kann die von der Elektronik erzeugte Wärme direkt über das. Trennelement an das Fördermedium abgeleitet werden.

Zur einfachen Montage der Piezo-Elemente können diese an der Innenfläche einer zylindrischen Hülse angeordnet oder befestigt sein. Zur Montage muß lediglich die vormontierte Hülse mit dem Piezo-Elementen entsprechend am Trennelement angeordnet werden.

In einer ebenfalls bevorzugten Ausführungsform ist das Trennelement kraft- und/oder formschlüssig mittels eines Gehäusedeckels am Gehäuse in Position gehalten. Nachfolgend werden mögliche Ausführungsformen der Erfindung anhand von Zeichnungen näher erläutert.

Es zeigen:
- Figur 1 :: Eine Spaltrohrpumpe mit einem Piezo-Wanderwellenmotor als Antrieb, wobei das Trennelement ein Spalttopf mit angeformtem Kragen ist;
- Figur 2 :: Eine Spaltrohrpumpe mit scheibenförmigem Trennelement;
- Figur 3 :: Eine Spaltrohrpumpe mit scheibenförmigem Trennelement mit konkav gewölbter Oberfläche;
- Figur 4 :: Eine Spaltrohrpumpe mit einen Spaltopf als Trennelement;
- Figur 5 bis 7:: Eine Ausschnittsvergrößerung des Spaltopfes im Bereich des anliegenden Rotors;
- Figur 8 :: Eine Spaltrohrpumpe mit Spaltopf als Trennelement, wobei das Laufrad mit seiner zylindrischen Mantelfläche teilweise an der zylindrischen Innenseite des Spalttopfs anliegt

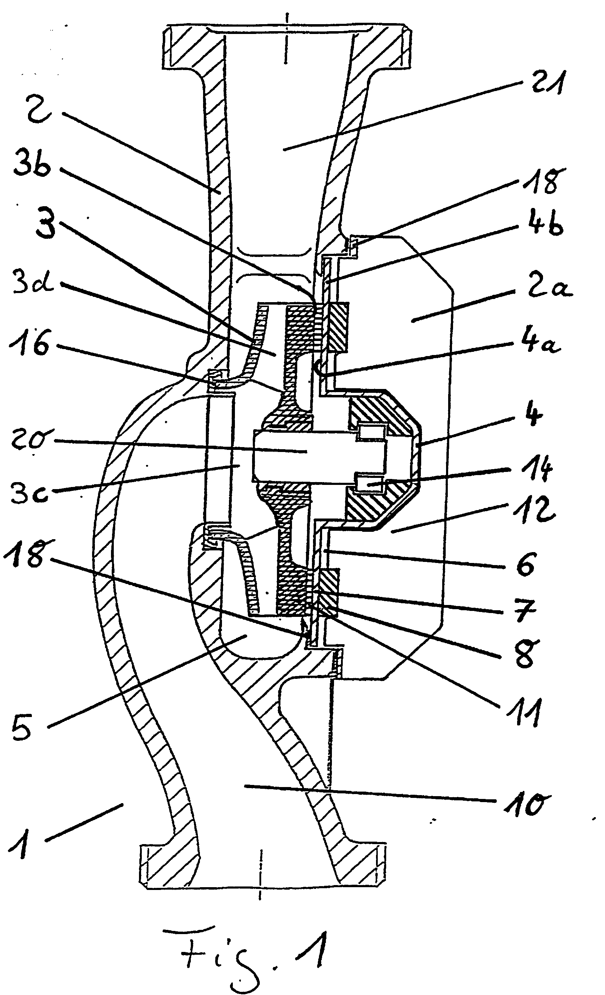

Die Figur 1 zeigt eine Pumpe 1 in deren Gehäuse 2 ein Laufrad 3 drehbar angeordnet ist. Das Laufrad 3 ist auf einer Welle 20 befestigt, die über das Rollenlager 14 am Trennelement 4 (Spalttopf) gelagert ist. Das Laufrad 3 ist in achsialer Richtung auf der Laufradseintrittseite 3c mittels eines Gleitlagers 16 gelagert, wobei das Gleitlager zusätzlich über eine Dichtung verfügt, die die Pumpenansaugseite 10 von der Pumpenauslaßseite 21 trennt. Das Laufrad 3 wird mittels des Gleitlagers 16 mit seiner auf der Stirnseite 3b befindlichen Haftschicht 11 gegen den Kragen 4b des Spalttopfes bzw.

Trennelementes 4 gedrückt. Mittels der Piezo-Elemente 8, die auf der dem Pumpenlaufrad 3 abgewandten Seite des Kragens 4b des Trennelementes 4 anliegen wird, zumindest im Bereich der Anlagefläche der Piezo-Elemente 8, der Kragen 4 b in Schwingung versetzt. Die Piezo-Elemente 8 andern dazu mittels an sie angelegter elektrischer Spannungen periodisch ihre Länge in axialer Richtung. Der Kragen 4b des Spalttopfes 4 übernimmt die Funktion des Schwingkörpers bzw. Schwingstators der bekannten Piezo-Wanderwellenmotoren. Auf der Oberfläche 4a des Trennelementes 4 wird im Bereich der Anlagefläche der Haftschicht 11 des Laufrades 3 eine Oberflächenwelle erzeugt, deren Maxima derart in die Haftschicht 11 des Laufrades 3 eingreifen, das durch die ellipsenförmige Bewegung der Oberflächenteilchen der Schwingstatoroberfläche 4a das Laufrad 3 in entgegengesetzter Richtung der Oberflächenwelle mitgenommen wird.

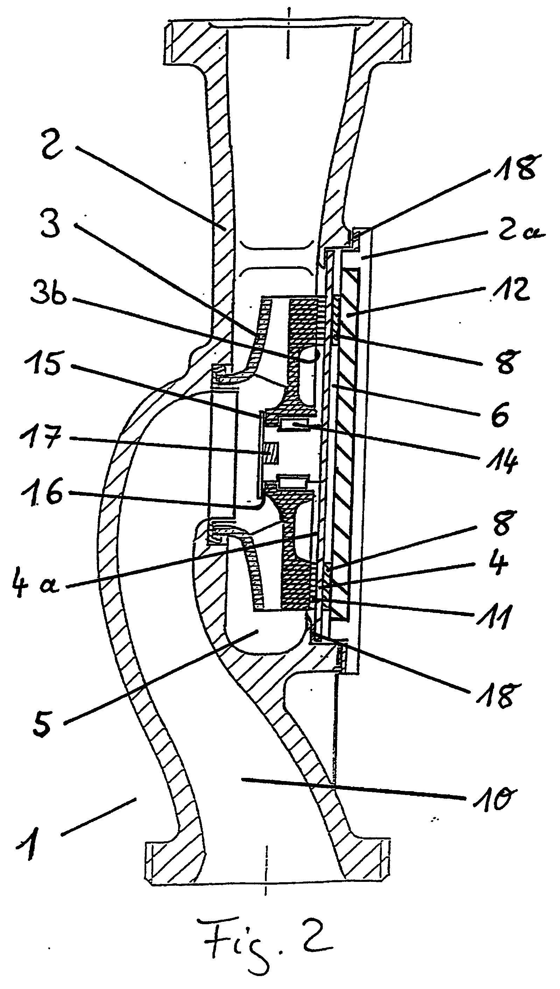

Die Figur 2 zeigt ebenfalls eine Kreiselpumpe, bei der die Elektronik 12 mittels einer Spaltscheibe 4 von der fördermediumsführenden Seite 5 der Pumpe 1 getrennt ist. Die Spaltscheibe 4 wird mittels der Piezo-Elemente 8 derartig in Schwingung versetzt, daß auf ihrer Oberfläche 4a eine Wanderwelle entsteht, deren Maxima in die Haftschicht 11 des Laufrades 3 eingreifen und dieses in Rotation versetzten. Das Laufrad 3 wird mittels einer Andruckscheibe 15 gegen die Oberfläche 4a der Trennscheibe 4 gedrückt, wodurch ein Kraftschluß zwischen der Haftschicht 11 und der Oberfläche 4a entsteht. Die Andruckscheibe 15 wird dabei über eine Feder 17 oder eine Andruckschraube 17 welche in der Welle 20 verankert ist angedrückt. Die Welle 20 ist an der Trennscheibe 4 angeformt oder entsprechend befestigt. Das Laufrad kann wie in Figur 2 dargestellt mittels eines Rollenlagers 14 auf der Welle 20 gelagert sein. Es ist jedoch auch jede andere Art der Lagerung denkbar. Die Elektronik 12 liegt in dem Gehäusedeckel 2a ein und ist mit dem Piezo-Elementen 8 mittels elektrischer Verbindungsleitung in elektrischem Kontakt. Der Gehäusedeckel 2a liegt abdichtend bei 18 an dem Gehäuse 2 an, wodurch die Elektronik 12 und die Piezo-Elemente 8 gegenüber Verschmutzung geschützt sind.

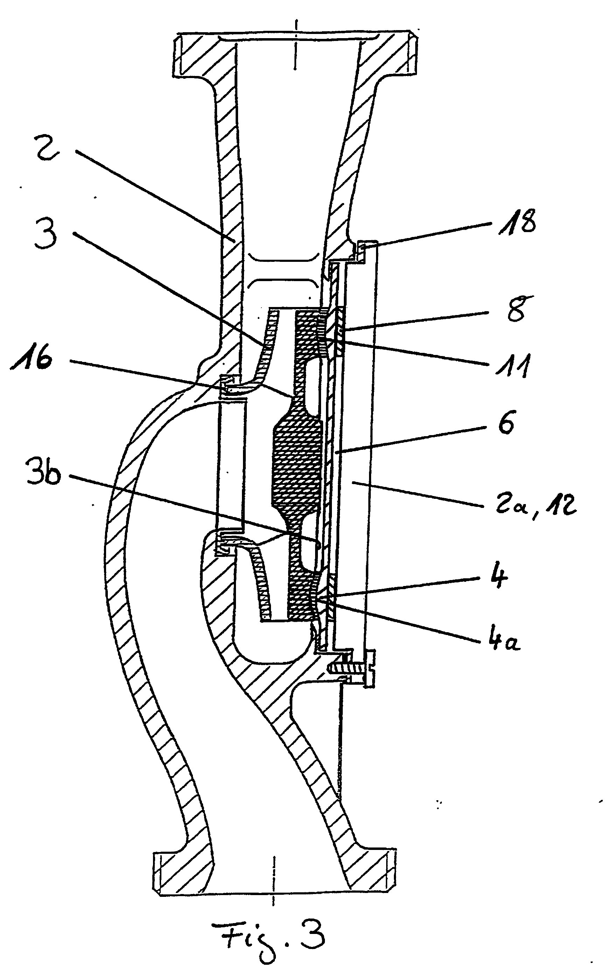

Die Figur 3 zeigt eine weitere Ausführungform einer entsprechenden Kreiselpumpe 1, wobei das Laufrad 3 zwischen einem Gleitlager 16 und der Trennscheibe 4 drehbar einliegt. Die Trennscheibe 4 ist auf Ihrer Oberflächenseite 4a im Bereich der anliegenden Haftschicht 11 des Laufrades 3 nach außen (konkav) gewölbt. Diese Wölbung verläuft ringförmig, wodurch die Haftschicht 11 stets den Wulst bedeckt bzw. ein- oder umschließt. Die Oberfläche der Haftschicht 11 bzw. des Laufrades 3 ist entsprechend des konvex geformten Wulstes der Oberfläche 4a konvex ausgebildet, wodurch sich eine konvexe Ringnut auf der der Trennscheibe 4 zugewandten Seite des Laufrades 3 ergibt. Durch den ringförmigen Wulst ist das Laufrad 3 in radialer Richtung gehalten, wodurch keine weitere Lagerung bzw. Welle zur Halterung des Laufrades 3 notwendig ist.

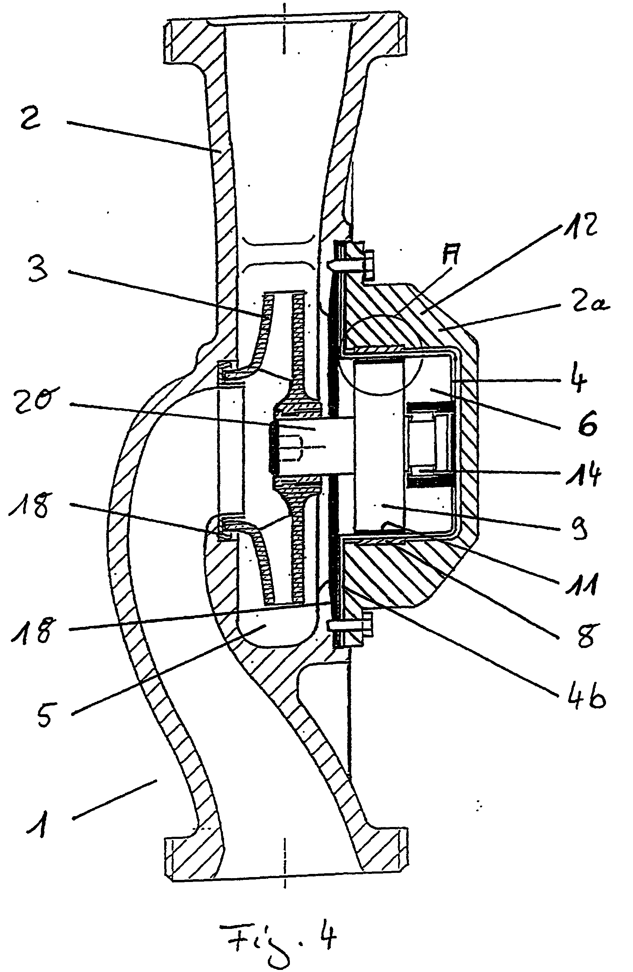

Die Figur 4 zeigt eine weitere Ausführungsform der erfindungsgemäßen Spaltrohrpumpe, wobei die Piezo-Elemente an der zylindrischen Außenmantelfläche des Spalttopfes 4 anliegen und eine Wanderwelle auf der dem Piezo-Elementen 8 abgewandten Seite 4a des Spalttopfes 4 erzeugen. An der dem Piezo-Elementen 8 abgewandten Innenseite der zylindrischen Wandung des Spalttopfes 4 liegt der Rotor 9 mit seiner Mantelfläche an, wobei auf der Mantelfläche des Rotors 9 eine Haftschicht 11 angebracht ist, in die die Maxima der auf der Innenseite des zylindrischen Teils des Spalttopfes 4 erzeugten Oberflächenwelle eingreifen.

Der Rotor 9 sitzt kraft- und/oder formschlüssig auf einer Welle 20, welche über ein zusätzliches Wellenlager 14 am Spalttopfboden gelagert ist. Ein derartiges zusätzliches Lager ist jedoch nicht zwingend erforderlich. Auf der Welle 20 ist das Laufrad 3 angeordnet. Durch die Oberflächenwelle des Spalttopfes 4 wird der Rotor 9 in Drehung versetzt und mit ihm die Welle 20 und das Laufrad 3. Im Gehäusedeckel 2a ist die Steuerelektronik 12 für die Piezo-Elemente 8 angeordnet. Die Steuerelektronik 12 liegt dabei vorteilsmäßig an dem Spalttopf 4 an, wodurch eine gute Kühlung durch das am Spalttopf 4 vorbeifließende Fördermedium gewährleistet ist.

Die Figuren 5 bis 7 zeigen eine Ausschnittsvergrößerung A der Kreiselpumpe aus Figur 4. Mittels der in den Figuren 5 bis 7 dargestellten Führung des Rotors 9 ist eine zusätzliche Lagerung der Welle 20 bzw. des Laufrades 3 nicht mehr nötig.

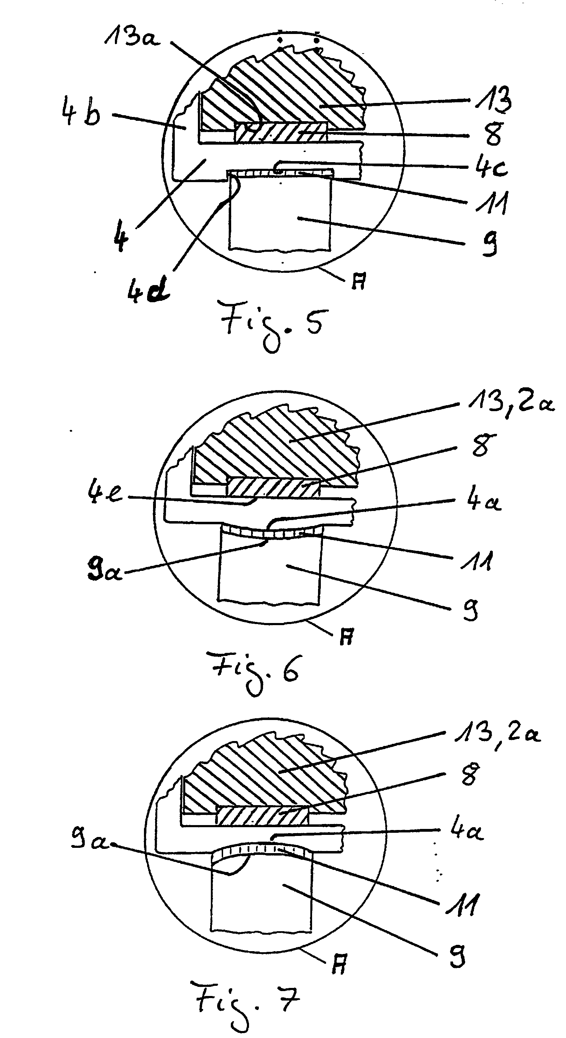

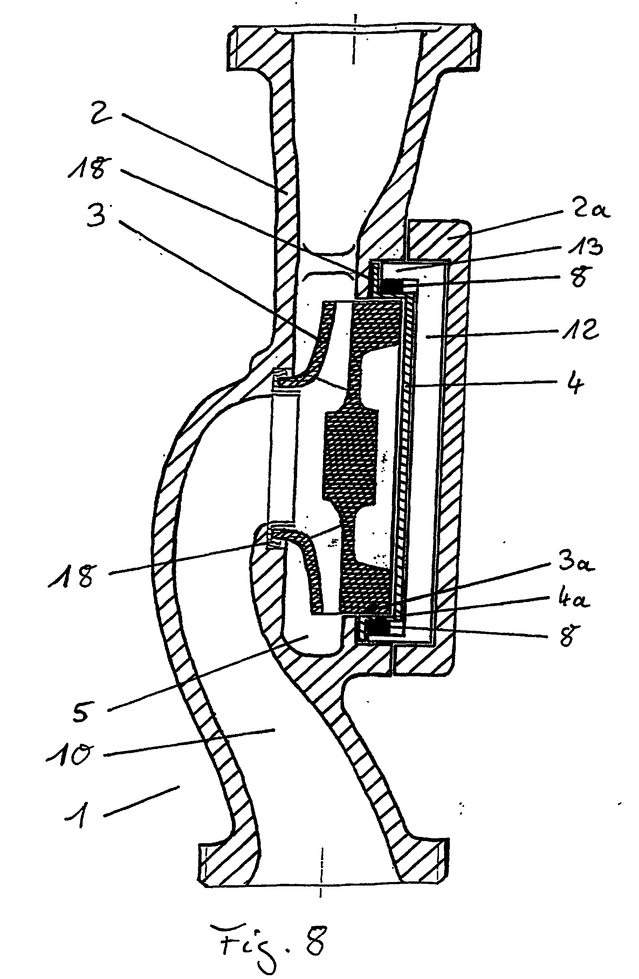

Die Piezo-Elemente 8 können, wie in den Figuren 5 bis 7 dargestellt, in einer Nut in der zylindrischen Innenfläche 13a einer Montagehülse 13 einliegen, wodurch sie gegenüber einem axialen Verschieben gesichert sind. Die Piezo-Elemente 8 liegen an der dem Rotor 9 abgewandten Seite der zylindrischen Mantelfläche des Spalttopfes 4 an. Die zylindrische Innenfläche 4a des zylindrischen Spalttopfmantels kann nach außen (Figur 6) oder nach innen (Figur 7) gewölbt sein. Auch ist es möglich, wie in Figur 5 dargestellt, daß der Rotor 9 mit seiner Haftschicht 11 in einer zylindrischen Nut 4c des Spalttopfes 4 einliegt und somit gegenüber einem axialen Verschieben gegenüber dem Spalttopf 4 gehindert ist. Durch die Ausgestaltung einer konvexen (Figur 6) oder konkaven (Figur 7) Ausgestaltung der Oberfläche 4a des Spalttopfes 4 im Bereich der Anlagefläche des Rotors 9 ist der Rotor 9 ebenfalls in axialer Richtung gelagert. Eine zusätzliche Lagerung des Rotors 9 ist nicht mehr erforderlich, da der Rotor 9 ebenfalls in radialer Richtung von der zylindrischen Innenfläche des Spalttopfes 4 gehalten ist.

Die Figur 8 zeigt eine Spalttopfpumpe 1 bei der das Laufrad 3 zusätzlich die Funktion des Rotors übernimmt. Hierbei hat das Laufrad 3 an seiner Mantelfläche 3a eine Haftschicht 11, die an der dem Piezo-Elementen 8 abgewandten Innenseite des Spalttopfes 4 anliegt. In diese nicht dargestellten Haftschicht 11 greifen die Maxima der auf der Oberfläche 4a erzeugten Wanderwelle und treiben das Laufrad 3 an. Die Piezo-Elemente 8 liegen dabei zwischen der zylindrischen Außenmantelfläche des Spalttopfes 4 und der zylindrischen Innenfläche eines Spalttopfes 4 oder einer Hülse 13. Die Hülse 13 kann dabei zusätzlich die Elektronik 12 tragen. Mittels des Gehäusedeckels 2a sind Elektronik 12, sowie Piezo-Elemente 8 gegenüber Verschmutzung geschützt. Der Gehäusedeckel 2a kann zusätzlich die Funktion des Anpressens des Spalttopfkragens 4b gegen das Gehäuse 2 übernehmen. Hierdurch sind zusätzliche Befestigungsmittel insbesondere Schrauben für den Spalttopf 4 nicht mehr erforderlich.

### Bezugszeichenliste

- 1: Pumpe
- 2: Pumpengehäuse
- 2a: Gehäusedeckel
- 3: Laufrad
- 3a: Mantelfläche des Laufrads
- 3b: Stirnseite des Laufrads
- 3c: Laufradeintritt
- 3d: Laufradkanäle
- 4: Trennelement
- 4a: Oberfläche des Trennelements, insbesondere zylindrischen Innenseite des Trennelements
- 4b: Kragen des Trennelements
- 4c: zylindrische Nut im Trennelement
- 4d: Seitenwände der Nut
- 4e: Anlagefläche der Piezo-Elemente
- 5: fördermediums führende Seite
- 6: elektrische Antriebsseite
- 7: Piezo-Wanderwellenmotors
- 8: Piezo-Elemente
- 9: Rotor
- 9a: Mantelfläche des Rotors
- 9b: Stirnseite des Rotors
- 10: Pumpeneinlaßseite
- 11: Haftschicht
- 12: Elektronik (Pumpensteuerung Bzw. -regelung)
- 13: Hülse
- 13a: zylindrische Innenfläche der Hülse
- 14: Rollenlager
- 15: Andruckscheibe
- 16: Gleitlager
- 17: Feder
- 18: Dichtung
- 19: Achse
- 20: Welle
- 21: Pumpenauslaßseite

## Patentansprüche

1. Pumpe (1) mit einem in einem Gehäuse (2) angeordneten Laufrad (3) und einem Trennelement (4), das die fördermediumsführende Seite (5) von der elektrischen Antriebsseite (6) trennt, wobei das Trennelement (4) insbesondere ein Spaltrohr, Spalttopf oder eine Spaltscheibe ist, und wobei das Laufrad (3) mittels eines Piezo-Wanderwellenmotors (7) angetrieben ist, **dadurch gekennzeichnet, daß** der Piezo-Wanderwellenmotor (7) Piezo-Elemente (8) hat, die einen Schwingstator in Schwingung versetzen und das Trennelement (4) der Schwingstator ist.

2. Pumpe (1) nach Anspruch 1, **dadurch gekennzeichnet, daß** das Laufrad (3) oder ein das Laufrad (3) tragender Rotor (9) am Trennelement (4) anliegt und mittels einer auf der Oberfläche (4a) des Trennelements (4) umlaufenden Wanderwelle in Rotation versetzbar ist.

3. Pumpe (1) nach Anspruch 2, **dadurch gekennzeichnet, daß** das Laufrad (3) oder der Rotor (9) mit seiner Mantelfläche (3a,9a) an der zylindrischen Innenseite (4a) des Trennelements (4) oder mit seiner der Pumpeneinlaßseite (10) abgewandten Stirnseite (3b,9b) am Trennelement (4) teilweise anliegt.

4. Pumpe (1) nach Anspruch 3, **dadurch gekennzeichnet, daß** die Piezo-Elemente (8) an der dem Laufrad (3) oder dem Rotor (9) abgewandten Seite des Trennelements (4) anliegen und mittels elektrischer Spannungen die Länge der Piezo-Elemente (8) in Richtung der Flächennormalen der Anlagefläche (3a,3b,9a,9b) zur Erzeugung der Wanderwelle auf dem Trennelement (4) veränderbar ist.

5. Pumpe (1) nach Anspruch 3, **dadurch gekennzeichnet, daß** die Piezo-Elemente (8) im oder am Trennelement (4) angeordnet sind und in Umfangsrichtung des Laufrads (3) bei Anlegen elektrischer Spannungen zur Erzeugung der Wanderwelle auf dem Trennelement (4) ihre Länge veränderbar ist.

6. Pumpe (1) nach einem der vorherigen Ansprüche, **dadurch gekennzeichnet, daß** das Laufrad (3) oder der Rotor (9) eine Anlagefläche (3a,3b,9a,9b) hat, die am Trennelement (4) anliegt, und auf der Anlagefläche (3a,3b,9a,9b) eine Haftschicht (11) ist, in die zumindest die Wellenberge der auf der Oberfläche des Trennelements (4) erzeugten Wanderwelle eingreifen.

7. Pumpe (1) nach einem der vorherigen Ansprüche, **dadurch gekennzeichnet, daß** das Laufrad (3) oder der Rotor (9) abdichtend an dem Trennelement (4) anliegt.

8. Pumpe (1) nach einem der vorherigen Ansprüche, **dadurch gekennzeichnet, daß** das Trennelement (4) an seiner dem Laufrad (3) zugewandten Seite einen Kragen (4b) hat.

9. Pumpe (1) nach Anspruch 8, **dadurch gekennzeichnet, daß** das Trennelement (4) mit seinem Kragen (4b) abdichtend am Gehäuse (2) anliegt.

10. Pumpe (1) nach einem der vorherigen Ansprüche, **dadurch gekennzeichnet, daß** das Laufrad (3) oder der Rotor (9) mittels des Trennelements (4) in axialer und/oder radialer Richtung gelagert ist.

11. Pumpe (1) nach einem der vorherigen Ansprüche, **dadurch gekennzeichnet, daß** die Anlagefläche (3a,3b,9a,9b) des Laufrads (3) oder Rotors (9) zumindest teilweise konkav oder konvex ausgestaltet ist und die Oberfläche (4a) des Trennelements (4) im Bereich der anliegenden Anlagefläche (3a,3b,9a,9b) des Laufrads (3) oder Rotors (9) bei konkav ausgestalteter Anlagefläche (3a,3b,9a,9b) konvex und bei konvex ausgestalteter Anlagefläche (3a,3b,9a,9b) des Laufrads (3) oder Rotors (9) konkav ausgestaltet ist.

12. Pumpe (1) nach einem der vorherigen Ansprüche, **dadurch gekennzeichnet, daß** die die Piezo-Elemente (8) steuernde Elektronik (12) am Trennelement (4) anliegt.

13. Pumpe (1) nach einem der vorherigen Ansprüche, **dadurch gekennzeichnet, daß** die Piezo-Elemente (8) an der Innenfläche (13a) einer zylindrischen Hülse (13) angeordnet bzw. befestigt sind.

14. Pumpe (1) nach einem der vorherigen Ansprüche, **dadurch gekennzeichnet, daß** das Trennelement (4) kraft- und/oder formschlüssig mittels eines Gehäusedeckels (2a) in Position gehalten ist.

## Claims

1. Pump (1) comprising a rotary wheel (3) arranged in a housing (2) and a separating element (4) which separates the medium conveying side (5) from the side of the electrical drive (6), and the separating element (4) is in particular a split pipe, split basin or a split disc, and the rotary wheel (3) is driven by means of a piezo progressive wave motor (7), **characterised in that** the piezo progressive wave motor (7) has piezo elements (8) which cause an oscillating stator to oscillate, and the separating element (4) is the oscillating stator.

2. Pump (1) according to Claim 1, **characterised in that** the rotary wheel (3) or a rotor (9) which supports the rotary wheel (3) abuts the separating element (4) and is rotated by means of a progressive wave which rotates on the surface (4a) of the separating element (4).

3. Pump (1) according to Claim 2, **characterised in that** the rotary wheel (3) or the rotor (9) partially abuts the cylindrical inside (4a) of the separating element (4) with its casing surface (3a, 9a) or the separating element (4) with its end surface facing away from the side of the pump intake (1).

4. Pump (1) according to Claim 3, **characterised in that** the piezo elements (8) abut the side of the separating elements (4) which is facing away from the rotary wheel (3) or the rotor (9), and the length of the piezo elements (8) is changeable by means of electrical currents in the direction of the surface normal of the abutment surface (3a, 3b, 9a, 9b) so as to generate the progressive wave on the separating element (4).

5. Pump (1) according to Claim 3, **characterised in that** the piezo elements (8) are arranged in or on the separating element (4), and their length is changeable in the peripheral direction of the rotary wheel (3) on applying electrical currents for generating the progressive wave on the separating element (4).

6. Pump (1) according to one of the above claims, **characterised in that** the rotary wheel (3) or the rotor (9) has an abutment surface (3a, 3b, 9a, 9b) which abuts the separating element (4), and on the abutment surface (3a, 3b, 9a, 9b) is an adhesive layer (11) which is engaged at least by the wave peaks of the progressive wave generated on the surface of the separating element (4).

7. Pump (1) according to one of the above claims, **characterised in that** the rotary wheel (3) or the rotor (9) sealingly abuts the separating element (4).

8. Pump (1) according to one of the above claims, **characterised in that** the separating element (4) has a collar (4b) at its side facing towards the rotary wheel (3).

9. Pump (1) according to Claim 8, **characterised in that** the separating element (4) sealing abuts housing (2) with its collar (4b).

10. Pump (1) according to one of the above claims, **characterised in that** the rotary wheel (3) or the rotor (9) are mounted by means of the separating element (4) in axial and/or radial direction.

11. Pump (1) according to one of the above claims, **characterised in that** the abutment surface (3a, 3b, 9a, 9b) of the rotary wheel (3) or the rotor (9) is at least partially of concave or convex design, and the surface (4a) of the separating element (4) in the area of the abutting abutment surface (3a, 3b, 9a, 9b) of the rotary wheel (3) or the rotor (9) is designed to be convex in the case of a concave abutment surface (3a, 3b, 9s, 9b) and concave in the case of a convex abutment surface (3a, 3b, 9a, 9b) of the rotary wheel (3) or the rotor (9).

12. Pump (1) according to one of the above claims, **characterised in that** the electronics (12) which control the piezo elements (8) abuts the separating element (4).

13. Pump (1) according to one of the above claims, **characterised in that** the piezo elements (8) are configured or mounted on the inside surface (13a) of a cylindrical sleeve (13).

14. Pump (1) according to one of the above claims, **characterised in that** the separating element (4) is held positively and/or flush in position by means of a housing cover (2a).

## Revendications

1. Pompe (1) avec une roue mobile disposée dans un carter (2) et un élément séparateur (4) qui sépare le côté de guidage du liquide refoulé (5) d'avec le côté d'entraînement électrique (6), l'élément séparateur (4) étant en particulier une gaine à fente, une coupelle à fente ou un disque à fente et la roue mobile (3) étant entraînée au moyen d'un moteur piézoélectrique à ondes progressives (7),
**caractérisée en ce que** le moteur piézoélectrique à ondes progressives (7) a des éléments piézoélectriques qui mettent en oscillation un stator oscillant et l'élément séparateur (4) est le stator oscillant.

2. Pompe (1) selon la revendication 1,
**caractérisée en ce que** la roue mobile (3) ou un rotor (9) portant la roue mobile (3) est adjacent à l'élément séparateur (4) et peut être mis en rotation au moyen d'une onde progressive circulant sur la surface (4a) de l'élément séparateur (4).

3. Pompe (1) selon la revendication 2,
**caractérisée en ce que** la roue mobile (3) ou le rotor (9) est partiellement adjacent à la face intérieure (4a) cylindrique de l'élément séparateur (4) par sa surface périphérique (3a, 9a) ou à l'élément séparateur (4) par sa face frontale (3b, 9b) écartée du côté admission (10) de la pompe.

4. Pompe (1) selon la revendication 3,
**caractérisée en ce que** les éléments piézoélectriques (8) sont adjacents à la face de l'élément séparateur (4) écartée de la roue mobile (3) ou du rotor (9) et la longueur des éléments piézoélectriques (8) est modifiable en direction des normales de surface des surfaces d'appui (3a, 3b, 9a, 9b), au moyen de tensions électriques, pour engendrer l'onde progressive sur l'élément séparateur (4).

5. Pompe (1) selon la revendication 3,
**caractérisée en ce que** les éléments piézoélectriques (8) sont disposés dans ou sur l'élément séparateur (4) et leur longueur est modifiable en direction périphérique de la roue mobile (3) par application de tensions électriques pour engendrer l'onde progressive sur l'élément séparateur (4).

6. Pompe (1) selon l'une des revendications précédentes,
**caractérisée en ce que** la roue mobile (3) ou le rotor (9) a une surface d'appui (3a, 3b, 9a, 9b) qui est adjacente à l'élément séparateur (4) et sur la surface d'appui (3a, 3b, 9a, 9b) se trouve une couche adhésive (11) dans laquelle sont engagés au moins les crêtes de l'onde progressive engendrée sur la surface de l'élément séparateur (4).

7. Pompe (1) selon l'une des revendications précédentes,
**caractérisée en ce que** la roue mobile (3) ou le rotor (9) est adjacent à l'élément séparateur (4) de manière étanche.

8. Pompe (1) selon l'une des revendications précédentes,
**caractérisée en ce que** l'élément séparateur (4) a une collerette (4b) sur sa face tournée vers la roue mobile (3).

9. Pompe (1) selon la revendication 8,
**caractérisée en ce que** l'élément séparateur (4) est adjacent de manière étanche, par sa collerette (4b), au carter (2).

10. Pompe (1) selon l'une des revendications précédentes,
**caractérisée en ce que** la roue mobile (3) ou le rotor (9) est logé en direction axiale et/ou radiale au moyen de l'élément séparateur (4).

11. Pompe (1) selon l'une des revendications précédentes,
**caractérisée en ce que** la surface d'appui (3a, 3b, 9a, 9b) de la roue mobile (3) ou du rotor (9) est conformée au moins partiellement concave ou convexe et la surface (4a) de l'élément séparateur (4) est conformée dans la zone de la surface d'appui (3a, 3b, 9a, 9b) adjacente de la roue mobile (3) ou du rotor (9), convexe dans le cas d'une surface d'appui (3a, 3b, 9a, 9b) conformée concave et concave dans le cas d'une surface d'appui (3a, 3b, 9a, 9b) de la roue mobile (3) ou du rotor (9) conformée convexe.

12. Pompe (1) selon l'une des revendications précédentes,
**caractérisée en ce que** l'électronique (12) commandant les éléments piézoélectriques (8) est adjacente à l'élément séparateur (4).

13. Pompe (1) selon l'une des revendications précédentes,
**caractérisée en ce que** les éléments piézoélectriques (8) sont disposés ou respectivement fixés à la surface intérieure (13a) d'une douille cylindrique (13).

14. Pompe (1) selon l'une des revendications précédentes,
**caractérisée en ce que** l'élément séparateur (4) est maintenu en position par adhérence et/ou à coopération de forme au moyen d'un couvercle de carter (2a).
